# EUROPEAN PATENT SPECIFICATION

(11) **EP 3 889 029 B1**
(45) Date of publication and mention of the grant of the patent: **30.11.2022**
(21) Application number: 21166767.0
(22) Date of filing: 01.04.2021
(51) Int. Cl.: B63B 27/10, B63B 35/00, F03D 13/10

(54) **DEVICE FOR LIFTING AND PLACING ON A GROUND SURFACE OF AN ELONGATE OBJECT, AND CORRESPONDING METHOD**
VORRICHTUNG ZUM ANHEBEN UND PLATZIEREN EINES LÄNGLICHEN GEGENSTANDES AUF EINE BODENFLÄCHE UND ENTSPRECHENDES VERFAHREN
DISPOSITIF DE LEVAGE ET DE PLACEMENT D'UN OBJET ALLONGÉ SUR UNE SURFACE DE SOL ET PROCÉDÉ CORRESPONDANT

(30) Priority: 03.04.2020 BE 202005220
(43) Date of publication of application: 06.10.2021
(73) Proprietor: DEME Offshore BE N.V., 2070 Zwijndrecht (BE)
(72) Inventor: RABAUT, Dieter Wim Jan, 9000 Gent (BE); NEKEMAN, Sebastian, 4819 AM Breda (NL)
(74) Representative: Arnold & Siedsma

(56) References cited:
- EP-A1- 2 886 722
- WO-A2-2019/103611

## Description

### TECHNICAL FIELD OF THE INVENTION

The invention relates to a device and method for placing an elongate object of at least 200 tons on a ground surface. The invention relates particularly to a device and method for placing a monopile of a wind turbine on an underwater bottom.

### BACKGROUND OF THE INVENTION

The invention will be elucidated with reference to an offshore wind turbine. The reference to such a wind turbine does not however imply that the invention is limited thereto, and the device and method can be applied equally well for placing on any ground surface any other sizeable elongate object, such as other offshore foundation structures, jetties, radar and other towers.

The foundation of a wind turbine at sea usually has an elongate design because the height difference between a wind turbine placed on the foundation and the underwater bottom has to be bridged. An additional length is further needed in order to anchor the foundation in the underwater bottom. A great deal of material is also required in order to absorb the considerable loads during use. A foundation therefore generally has a relatively high weight. Foundations are moreover becoming increasingly heavy because wind turbines are being designed to be increasingly large.

A frequently applied foundation of a wind turbine comprises a monopile which can be provided on an upper side with a transition piece which forms the connection to a turbine mast arranged on the monopile. The monopile is carried under water and driven with an underside into the underwater bottom. Monopiles typically comprise hollow cylindrical structures of steel or concrete which can have a length of more than 50 m, a diameter of 6 m and more, and a weight which can rise to 800 tons and more.

A known method for placing a monopile on an underwater bottom comprises of taking up the monopile from a vessel using a lifting means such as a crane and lowering the monopile onto or into the underwater bottom, the monopile being kept under control here in a roughly vertically oriented position by auxiliary cables operated with winches. Only when the monopile has been fixed in the underwater bottom, for instance by being driven into the underwater bottom, is the monopile uncoupled from the lifting means.

EP 2886722A1 discloses a device for lifting and placing an elongate object such as a monopile, on a ground surface. The device comprises a floating platform on which a lifting device for lifting the object is arranged. A gripping construction is connected to the work deck in a fixed position and has gripping members for engaging a peripheral part of the object when the object is brought down in a vertical position towards the sea bottom. The gripping construction is provided with movement-damping means for damping movements of the gripping members relative to the work deck under the influence of waves.

WO 2018/117846A1 discloses a similar device comprising a gripping construction in a fixed position along an edge of the vessel.

WO 2019/103611A1 discloses yet another device for lifting and placing an elongate object on a ground surface. The platform may be equipped with a fixed gripping construction. In another embodiment, a cantilevered outrigger may be provided, the position of which along an edge of the platform may be altered for positioning it above an oil well.

WO2007091042A1 discloses a device for lifting, transporting and placing a complete offshore structure such as a wind turbine tower on a sea bottom. The lifting device comprises two A-frame-shaped booms, disposed at a distance from each other, for lifting the complete offshore structure, optionally using a crossbar.

A YouTube video obtainable from https://www.voutube.com/watch?v=nYNfGv7KA5w shows another lifting device provided with A-booms. It is used for placing an elongate object on a sea bottom. In this project, the object was taken up with a vibro-hammer which obviates the use of a fixed pile gripper for ensuring verticality during hammering the object into the sea bottom.

A drawback of the known methods and devices is that they can only be performed in a relatively calm sea. Such a sizeable object is indeed subject to a great deal of energy from the sea (currents, waves) and from the wind as it is lowered into the water. The heavier the swell, the more difficult it becomes to keep a sizeable object such as a monopile under control. Because it is only possible to work in a relatively calm sea, much time may be lost.

### SUMMARY OF THE INVENTION

An object of the present invention is therefore to provide a device and method for placing an elongate object of at least 200 tons on a ground surface, which at least partially obviates the above stated drawback of the prior art. The invention particularly seeks to provide an improved device and method for placing a monopile of a wind turbine on an underwater bottom.

Provided for this purpose according to the invention is a device according to claim 1. The device is designed to lift and place on a ground surface an elongate object of at least 200 tons, and comprises for this purpose a floating platform with a work deck on which a lifting device for lifting the object is arranged, wherein the lifting device comprises two A-frame-shaped booms which are disposed at a mutual distance in an athwartship direction of the platform and which are connected to the work deck for pivoting around an athwartship axis of the platform, and which are for this purpose in force-transmitting connection with two corresponding A-frame-shaped support structures arranged on the work deck, wherein the lifting device further comprises a gripping construction which is connected to the work deck and has gripping members which are configured to engage a peripheral part of the object and which extend beyond an athwartship edge of the platform, wherein the gripping construction is displaceable over the work deck in the athwartship direction, at least between the booms.

The combination of the claimed two booms with an A-frame-shape and the displaceable gripping construction connected to the work deck and having gripping members protruding beyond the athwartship edge of the platform enables relatively heavy elongate objects, such as the current and future monopiles, to be placed on a ground surface such as an underwater bottom and anchored therein in safe manner.

The prior art lacks a gripping construction that is displaceable over the work deck along an athwartship edge of the platform at least between the booms.

According to an embodiment of the invention, a device wherein the force-transmitting connection between each boom and the corresponding A-frame-shaped support structure comprises a tensioning cable running between the two has the advantage that relatively great loads can be lifted.

It is further advantageous for the device to be characterized according to an embodiment in that at least one of the two booms is displaceable over the work deck in the alongship direction. This advantage will be further elucidated below in the context of the method, to be performed with the device, for lifting and placing on a ground surface of an elongate object of at least 200 tons.

The device according to yet another embodiment has the feature that the object can be taken up at a lifting point of one of the two booms and the gripping construction is configured to engage the object suspended from the relevant boom at a distance from the lifting point.

The gripping members extend beyond the athwartship edge of the platform, whereby an object suspended from a boom of the lifting device can hang downward along the athwartship edge of the platform.

The floating platform can have a square form bounded by two athwartship and two alongship edges. An athwartship edge runs in an athwartship direction, which is perpendicular to a direction of navigation of the platform. An alongship edge runs in an alongship direction, which is parallel to a direction of navigation of the platform. The platform can be independently driven or be advanced with another vessel. The platform can optionally also be provided with a number of corner piles which can engage on the underwater bottom and which can lift the work deck above the water surface.

Because the booms have an A-shape wherein each leg of a boom is connected to the work deck for pivoting around an athwartship axis of the platform, an A-shaped boom is unable to rotate relative to the work deck around an axis running perpendicularly of the work deck. The platform must therefore be oriented in modified manner during lifting and placing on a ground surface of an elongate object.

The gripping construction is displaceable over the work deck in the athwartship direction, this at least between the booms. The connection of the gripping construction to the work deck can for this purpose comprises a set of wheels which is movable over a rail guide which extends over the work deck in the athwartship direction, preferably along (and in the vicinity of) the athwartship edge. In addition to a rail guide, other types of guide are likewise possible. The displacing of the gripping construction can take place in active manner, for instance by driving the wheels, but can also take place passively, namely by co-displacing with a movement of the object received in the gripping construction.

In an embodiment of the invention the gripping members lie in a plane and the plane of the gripping members is rotatable around an alongship axis between a horizontal and vertical position. This allows a rotation movement around the same axis of an object received in the gripping members.

The gripping members can take any suitable form. A particularly suitable embodiment comprises a gripping construction, the gripping members of which are movable between an open position, in which the peripheral part of the object can be received by the gripping members, and a closed position of the gripping members. In the closed position of the gripping members they can together form a circular enclosure of the engaged peripheral part. In this embodiment the gripping members connect fittingly to the peripheral part, which in many cases will indeed also be circular, for instance in the case of a cylindrical monopile.

The gripping members can be movable in known manner between the open and closed position, for instance by actuators in the form of hydraulic cylinders.

Another embodiment of the invention has the feature that the gripping construction further comprises a support configured to support an underside of the object during the lifting. This embodiment reduces the risk of an object suspended from a boom of the lifting device sliding out of its suspension.

A suitable embodiment comprises a support which comprises two arms mounted on the gripping construction, for instance arms mounted on the gripping members of the gripping construction. During use the arms extend on opposite sides of the object and are provided on an underside with hooks which support the underside of the object. A simple embodiment comprises a support which is U-shaped, wherein the base of the U-shape supports the underside of the object.

Another suitable embodiment relates to a device wherein the gripping construction further comprises movement-damping means configured to damp movements of the gripping members relative to the work deck. This embodiment of the device, and more specifically the gripping construction thereof, acts as a damping system which absorbs at least some of the energy of an object suspended from a boom of the lifting device without swinging movements of the object otherwise being wholly prevented. The movement-damping means ensure that, while a movement of the object can take place, this is increasingly countered as the movement becomes greater. Swinging movements of the object are thus damped.

A preferred embodiment of the invention relates to a device wherein the movement-damping means are configured to damp movements of the gripping members parallel to the athwartship direction.

The movement-damping connection between the gripping members and the work deck can be configured in many ways. It is thus possible for the movement-damping means to comprise a mechanical spring means which is arranged between the gripping members and the work deck. A suitable mechanical spring means comprises for instance a prestressed wire, preferably steel wire, which is connected to a winch, if desired by means of a hydraulic cylinder. The movement-damping means can also comprise a hydraulic piston cylinder and throttle means for hydraulic liquid present in the piston cylinder. Yet another embodiment comprises movement-damping means in the form of a hydraulic synchronous cylinder arranged between the gripping members and the support structure. A synchronous cylinder (also referred to as synchronization cylinder) is provided with a piston rod on both sides of the piston disc. Running between the cylinder volumes present on either side of the piston rod is an external hydraulic conduit which connects the cylinder volumes. The volume of the hydraulic oil flowing in and out therefore always remains the same. A synchronous cylinder acts in two directions without an accumulator being necessary. The throttle means can be embodied as openings in the piston of the piston cylinder and/or as constrictions in the hydraulic conduits. Suitable throttle means for instance comprise optionally controllable throttle valves.

In order to be able to absorb and transmit the considerable forces in efficient manner to the work deck of the platform when an object is taken up, the device is characterized according to an embodiment of the invention in that the gripping construction comprises a lattice frame which is connected to the work deck and on which the gripping members are mounted.

It is further advantageous for the gripping construction, and particularly the lattice, to be rotatably connected to the work deck. The gripping construction can thus be brought into a folded-down, non-operational position, which saves space. In the case that for instance a wind turbine is placed at sea, a fold-down gripping construction creates more space for installing auxiliary constructions such as for instance a transition piece between the wind turbine and a placed monopile, and navigating away from the device is moreover simplified. In order to engage an object the gripping construction can be brought into an operational position, for instance by being folded out.

A further embodiment according to the invention relates to a device wherein the gripping members lie in a plane and the gripping construction comprises a rotary motor which is connected to the work deck and which is configured to rotate the plane of the gripping members between the horizontal and the vertical position around the alongship axis. If desired, the rotation can also be passive, in which embodiment the rotary motor is replaced by a cylindrical support part which allows such a rotation.

Another aspect of the invention relates to a method for lifting and placing on a ground surface of an elongate object of at least 200 tons, wherein the method comprises the steps of
a) providing a device according to any one of the foregoing claims;
b) positioning the gripping construction on a first, alongship side of the platform at the position of a first boom;
c) engaging a first peripheral part of the object in a substantially horizontal position with the gripping members of the gripping construction;
d) engaging another, second peripheral part of the object in substantially horizontal position with a sling or other engaging means, wherein the sling is connected to a second room positioned opposite the alongship side;
e) lifting the second peripheral part with the second boom so that the object rotates around the gripping construction from the horizontal position to a substantially vertical position;
wherein the gripping construction moves from the first to the second boom in the athwartship direction during step e).

The claimed method makes it possible to lift relatively heavy objects and place them on a ground surface in a heavier swell than is possible with the known method.

In an embodiment of the invention the object is taken up at a lifting point by the second boom, wherein the gripping members lie in a plane and the plane rotates between a horizontal and a vertical position around an alongship axis in step e).

Another embodiment of the invention relates to a method wherein an underside of the object is supported with a support, at least during the lifting.

A further improved method has the feature that movements of the gripping members relative to the work deck are damped, preferably movements of the gripping members parallel to the athwartship direction.

In another embodiment of the invented method the second boom has been displaced over the work deck in the alongship direction relative to the first boom, into a position lying further away from the athwartship edge - where the gripping construction is situated - than the position of the first boom. The displacement of the gripping construction in the athwartship direction from the first to the second boom during step e) is hereby facilitated, and the forces distributed better.

The rotation of the object from the horizontal position to a substantially vertical position is further facilitated in an embodiment of the method in which the first and the second peripheral part lie at a mutual distance and on either side of the centre of gravity of the object.

In another embodiment of the method the second peripheral part comprises a trunnion with which the sling can engage. The sling hereby keeps engaging at substantially the same position during the rotation.

A further optimized method further comprises according to an embodiment the steps of:
f) lowering the object onto or into the ground surface in the substantially vertical position;
g) fixing the object relative to the ground surface using a pile-driving means; and
h) uncoupling the object from the device.

The pile-driving means is preferably suspended from the second boom. If the support was applied during lifting and rotating of the object, the support on the underside of the object is removed prior to step f).

Although the device and method according to the invention can be applied for the purpose of placing any sizeable, elongate object on or in a ground surface, the object is preferably the monopile of a wind turbine, and the ground surface an underwater bottom.

Fixing relative to the ground surface of a sizeable, elongate object placed on or in a ground surface with the device and method according to the invention can take place in any manner. It is thus possible to drive a monopile into the ground surface by making use of a per se known hydraulic hammer, by drilling or by another suitable technique. In a preferred method the object is supported by the gripping construction while the object is being driven into the ground.

Finally, it is stated that the embodiments of the invention described in this patent application can be combined in any possible combination of these embodiments. Each embodiment can individually form the subject-matter of a divisional patent application.

### BRIEF DESCRIPTION OF THE FIGURES

The invention will now be elucidated with reference to the following figures, without otherwise being limited thereto. In the figures:
Fig. 1 is a schematic perspective view of a floating platform which can be applied in a device according to an embodiment of the invention;
Fig. 2 is a schematic perspective view of a device according to an embodiment of the invention;
Fig. 3 is a schematic perspective detail view of the gripping construction according to an embodiment of the invention shown in figure 2;
Fig. 4A is a schematic perspective view of the gripping construction, in different positions, according to an embodiment of the invention;
Fig. 4B is a schematic side view of the embodiment of the gripping construction according to the invention shown in figure 4A;
Fig. 4C is a schematic top view of the embodiment of the gripping construction according to the invention shown in figure 4A;
Fig. 5 is a schematic perspective view of yet another embodiment of the gripping construction according to the invention;
Fig. 6 is a schematic perspective side view of yet another embodiment of the device according to the invention in which a monopile is received in substantially horizontal position;
Fig. 7A-7D are schematic representations of different steps of a method according to an embodiment of the invention;
Fig. 8 is a schematic perspective detail view of one of the steps shown in figures 7A-7D;
Fig. 9A-9E are schematic representations of different subsequent steps of a method according to an embodiment of the invention.

### DESCRIPTION OF EXEMPLARY EMBODIMENTS

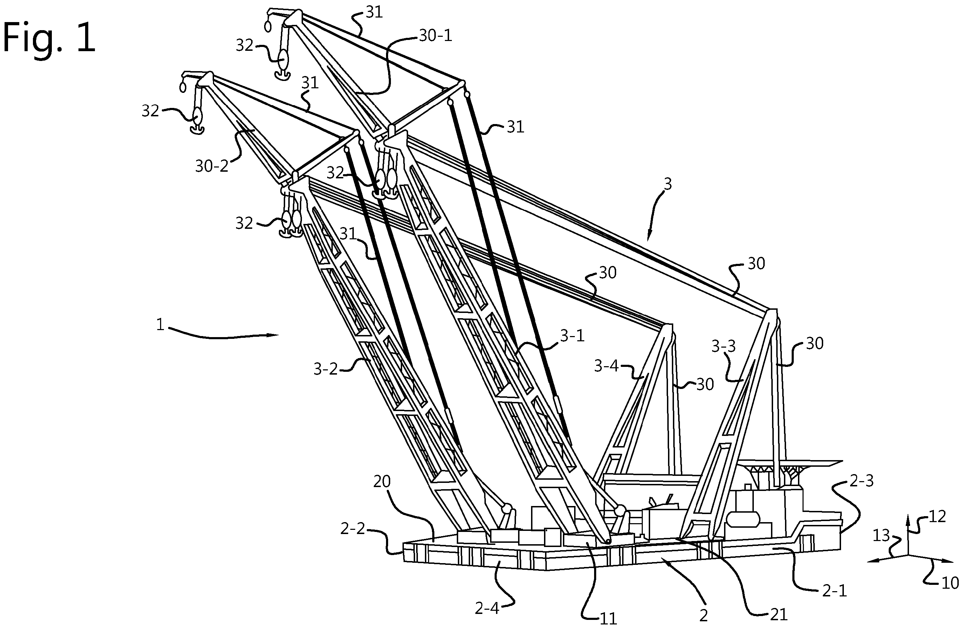

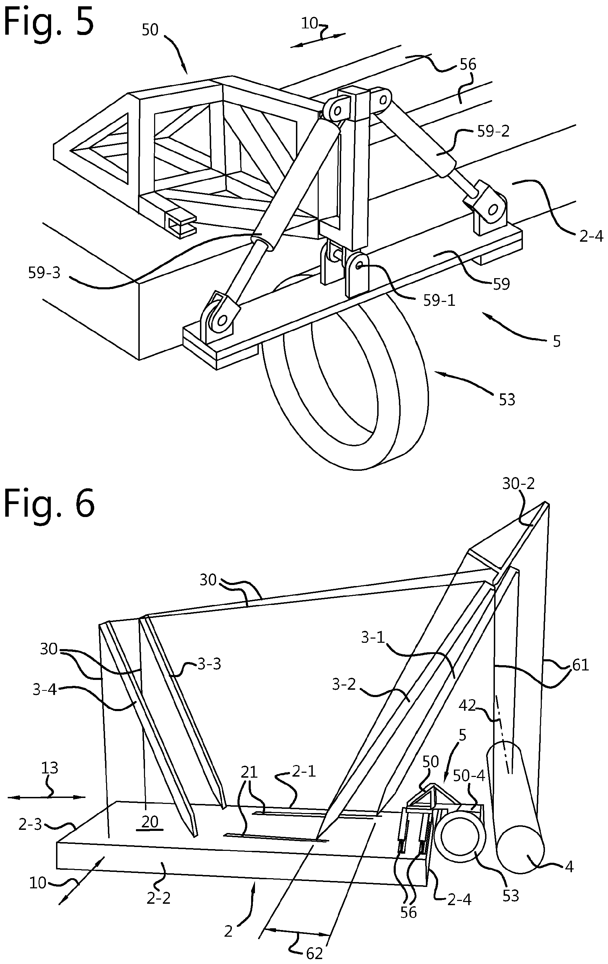

Referring to figure 1, a device according to an embodiment of the invention is shown. More specifically, figure 1 shows a floating platform 2 which can be applied in such a device. Device 1 is designed for lifting and placing on a ground surface of an elongate object of at least 200 tons, such as the monopile 4 shown in figures 6-9. Such a monopile 4 can for instance be applied as foundation for an offshore wind turbine (not shown).

Floating platform 2 has a work deck 20 on which is arranged a lifting device 3 for lifting the monopile 4. Lifting device 3 comprises a first boom 3-1 disposed on an alongship side 2-1 of platform 2. In the shown embodiment this alongship side 2-1 is the starboard side of platform 2. A second boom 3-2 is disposed on work deck 20 of platform 2 on an opposite alongship side 2-2. In the shown embodiment the opposite alongship side 2-2 is the port side of platform 2. The two booms (3-1, 3-2) are disposed at a mutual distance in an athwartship direction 10 of platform 2. The booms (3-1, 3-2) take the form of an A-frame, both legs of which are connected on an underside thereof to work deck 20 for pivoting around an athwartship shaft 11 of platform 2. Due to the A-shape of the two booms (3-1, 3-2), these booms are unable to rotate relative to work deck 20 around an orientation axis 12 running perpendicularly of work deck 20. During lifting and placing on a ground surface of a monopile 4 the platform 2 must therefore preferably be oriented and fixed in a modified manner.

The rotation of the booms (3-1, 3-2) around the athwartship shaft 11 can take place by means of a force-transmitting connection to two corresponding A-frame-shaped support structures (3-3, 3-4) arranged on work deck 20. In the shown embodiment the force-transmitting connection comprises tensioning cables 30 running between each boom (3-1, 3-2) and the corresponding A-frame-shaped support structure (3-2, 3-4). Taking in the tensioning cables 30 causes a rotation of the booms (3-1, 3-2) in the direction of a stern 2-3 of platform 2, while paying out the tensioning cables 30 causes a rotation of the booms (3-1, 3-2) in the direction of a stem 2-4 of platform 2. If desired, the booms (3-1, 3-2) are also provided with auxiliary booms (30-1, 30-2) which can be operated with tensioning cables 31. The booms (3-1, 3-2, 30-1, 30-2) are also each provided with a hoisting hook 32, which can be operated with corresponding cables.

The booms (3-1, 3-2) are displaceable over the work deck 20 of the platform in an alongship direction 13. This can be achieved by a rail guide 21 connected to work deck 20. In the shown embodiment platform 2 is self-driving, although this is not necessary.

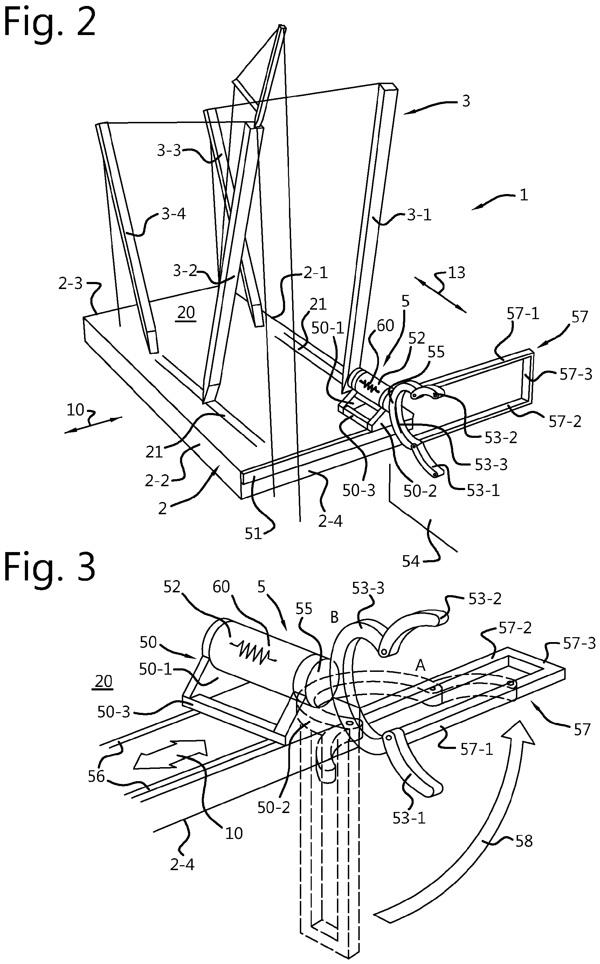

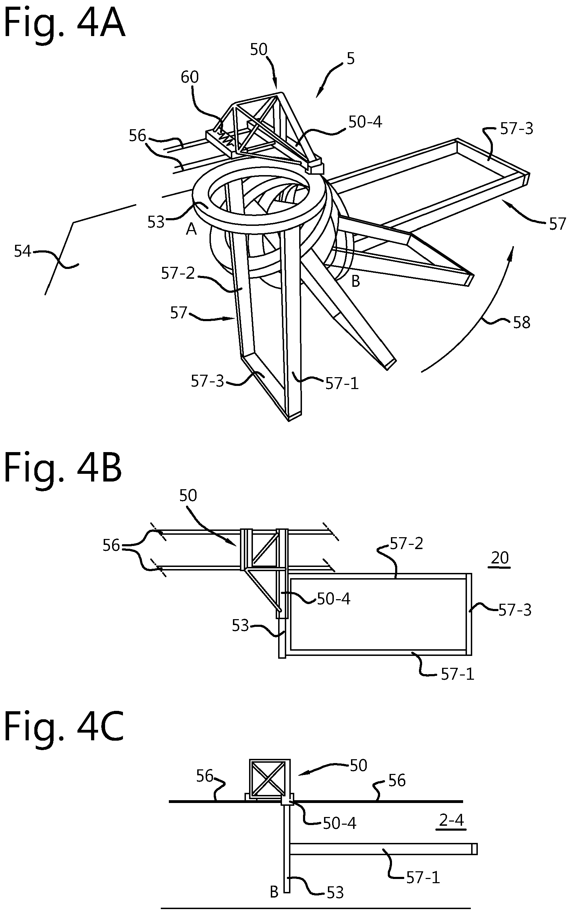

Referring to figure 2, it is shown that lifting device 3 further comprises a gripping construction 5 connected to work deck 20. The gripping construction 5 comprises a base 50 which is displaceable over work deck 20 between the booms (3-1, 3-2) in the athwartship direction 10. For this purpose base 50 is connected to work deck 20 by means of a gliding device 51. It is also possible to provide a rail connection 56 (see figure 3) between base 50 and work deck 20. In the embodiment shown in figures 2 and 3 the base 50 comprises two triangular side plates (50-1, 50-2) which are mutually rigidly connected with transverse beams 50-3. On an upper side of base 50 the gripping construction 5 is provided with a cylindrical part 52 in which gripping members (53-1, 53-2) are received via a shared part 53-3. The gripping members (53-1, 53-2) can be moved between an open position shown in figures 2 and 3, in which a peripheral part 40 of a monopile 4 can be received by the gripping members (53-1, 53-2), and a closed position of the gripping members (53-1, 53-2), shown in figures 4 and 5, in which this is no longer possible.

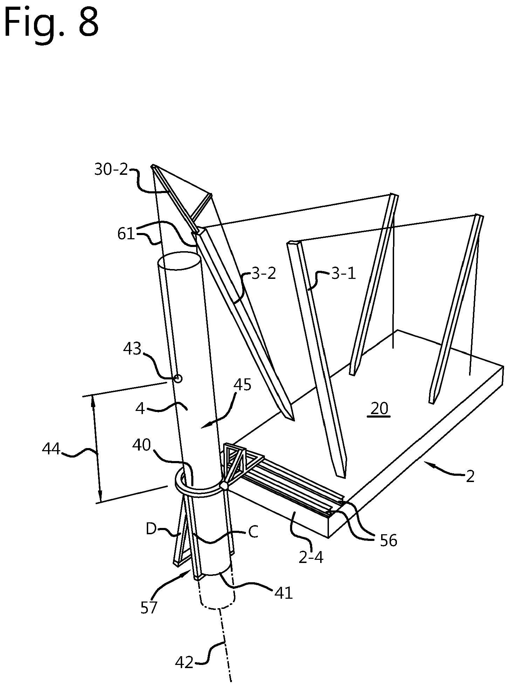

The gripping members (53-1, 53-2) and the shared part 53-3 lie in a plane 54, and the shared part 53-3 is connected to the cylindrical part 52 such that the plane is rotatable around an alongship axis 55 between a horizontal position (see for instance figure 8) and a vertical position shown in figure 2. This rotation is shown schematically in figure 3 with arrow 58. The rotation can be active, for instance by incorporating a rotary motor (not shown) in cylindrical part 52, or passive.

Gripping construction 5 further comprises a support 57 which is configured to support an underside 41 of a monopile 4 during lifting. Support 57 comprises two arms (57-1, 57-2) mounted on the shared part 53-3 of the gripping members (53-1, 53-2) and a lower bracket 57-3, these together forming a U-shape.

Gripping construction 5 can also be referred to as upending tool, since it is configured to upend a monopile 4 or other elongate object received therein in co-action with one or both of the booms (3-1, 3-2, 30-1, 30-2). Due to the dimensions of a monopile 4, the gripping construction can have a high relative weight, for instance a total weight of 200-250 tons and more.

Another embodiment of gripping construction 5 is shown in figure 4. In this embodiment base 50 comprises a robust steel frame (for instance of about 300 tons) which is constructed from steel diagonal tubes, vertical tubes and hot-formed steel tubes for additional strengthening, and which extends partially beyond an athwartship edge in the form of the stem 2-4. Gripping members 53 (53-1, 53-2, 53-3) are connected to a transverse beam 59 which is rotatable around a central shaft 59-1 using two hydraulic cylinders (59-2, 59-3) engaging on outer ends of transverse beam 59.

Yet another embodiment of gripping construction 5 is shown in figures 4A (perspective view), 4B (top view) and 4C (front view). In this embodiment the base 50 likewise comprises a robust steel frame (for instance of about 300 tons) which is constructed from steel diagonal tubes, vertical tubes and hot-formed steel tubes for additional strengthening, and which protrudes with a horizontal beam 50-4 partially beyond an athwartship edge in the form of the stem 2-4. Gripping members 53 (53-1, 53-2, 53-3) are connected rotatably to an outer end of the horizontal beam 50-4, whereby the plane 54 of gripping members 53 can be rotated from a horizontal position A to a vertical position B.

In the shown embodiments the gripping members (53-1, 53-2, 53-3) together form in the closed position a circular cross-section. It should be noted here that gripping members 53 are preferably designed to be adapted to different object dimensions and diameters. It can thus be useful to be able to take up monopile diameters of for instance 8 metres to 11 metres and more.

It is further advantageous if the gripping members (53-1, 53-2) can be opened and closed remotely with a remote control. The gripping members (53-1, 53-2) can thus for instance be opened in order to receive a monopile 4 suspended from the booms (3-1, 3-2) in horizontal position (see figure 6) or another object. Once a peripheral part 40 of monopile 4 is enclosed between the gripping members (53-1, 53-2) and an underside 41 of the monopile supports on the lower bracket 57-3 of support 57, monopile 4 can be upended with a boom (3-1, 3-2), wherein gripper construction 5 makes it possible to counter in principle every movement in alongship direction 13 and in athwartship direction of peripheral part 40.

The dimensions of support 57 can likewise be adapted to the dimensions of the object to be taken up. It can thus be useful to opt for a length of the arms (57-1, 57-2) of 30-40 metres, for instance 37.5 metres, and a length of the lower bracket 57-3 of for instance about 15 metres, taking into account a monopile diameter of for instance 15 metres. The lower bracket 57-3 provides for, among other things, limiting of movement in a longitudinal direction 42 of monopile 4 during upending of monopile 4. This also relieves the boom.

The gliding device (51, 56) allows a movement of a monopile suspended in a boom (3-1, 3-2) toward the boom (3-1, 3-2) from which monopile 4 is suspended, as will be further elucidated hereinbelow.

Gripping construction 5 is further provided with movement-damping means 60 (accommodated in base 50 and therefore not visible), which are shown schematically with the spring symbol and are configured to damp movements of gripping members 53 relative to work deck 20, particularly to damp movements of gripping members 53 parallel to the athwartship direction 10. The movement-damping means 60 ensure that while a movement of a monopile 4 suspended from a boom can take place, this is increasingly countered as the movement becomes greater. Swinging movements of monopile 4 are thus damped. The movement-damping means 60 can comprise a mechanical spring means which is arranged between gripping members 53 and work deck 20, but other embodiments are also possible.

During use one of the booms (3-1, 3-2), preferably the boom 3-2 on port side 2-2, can be placed with an underside further rearward (toward stem 2-3) than boom 3-1 on starboard side 2-1 by a distance 62. This relative position can be achieved by displacing port boom 3-2 over rail guide 21.

Referring to figures 6-9, an embodiment is shown of a method for lifting a monopile 4 and placing it on a ground surface.

As shown in figure 6, a monopile 4 transported by a vessel is brought close to platform 2 in substantially horizontal position while floating, wherein platform 2 is positioned such that monopile 4 can be anchored in the underwater bottom at the desired underwater position. Monopile 4 is here positioned with its longitudinal direction 42 substantially parallel to the stem 2-4 (the athwartship edge where gripping construction 5 is situated). A sling 61 (belly sling) which is suspended from a second boom 3-2 and is arranged around a second peripheral part 43 of monopile 4 can be helpful here. Sling 61 runs here around trunnions 43 arranged on the peripheral part 43 of monopile 4 (see figure 8).

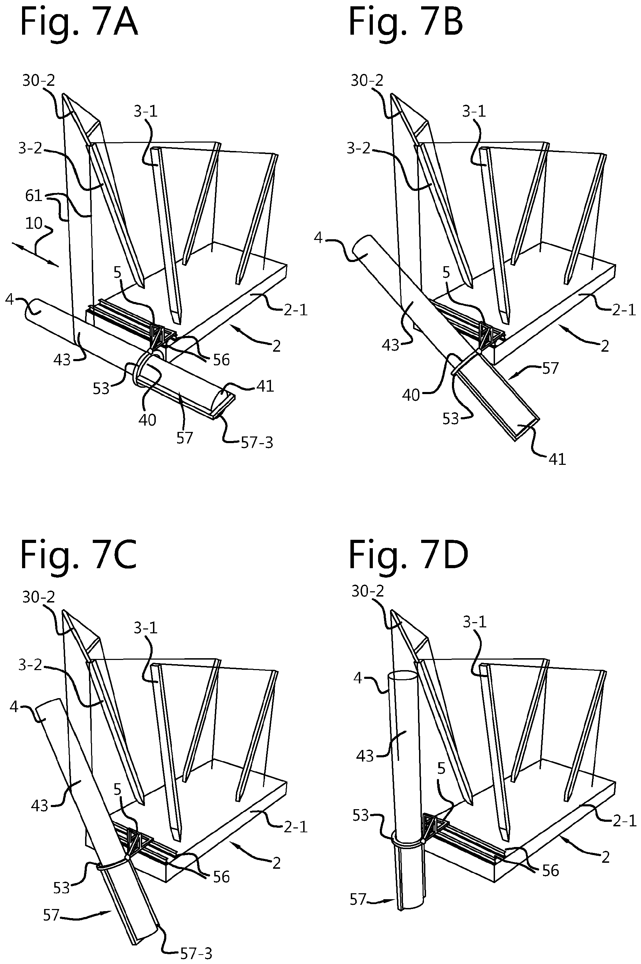

The gripping members (53-1, 53-2) of gripping construction 5 are then opened and a first peripheral part 40 is carried between the gripping members (53-1, 53-2), this to a point such that an underside 41 of monopile 4 has been carried to a position against the lower bracket 57-3 of support 57. The gripping members (53-1, 53-2) are then closed until they enclose peripheral part 40, as shown in for instance figure 7A.

Gripping construction 5 is first positioned at the position of a first boom 3-1 on a first, alongship side of platform 2. In the embodiment shown in figure 7 the first, alongship side is the starboard side 2-1. As already described above, a first peripheral part 40 is then gripped with the gripping members (53-1, 53-2) of gripping construction 5, wherein monopile 4 is in a substantially horizontal position while floating.

After another, second peripheral part 43 was engaged with sling 61, wherein sling 61 is connected to a second boom 3-2, positioned on port side 2-2, the second peripheral part 43 is lifted with the second boom 3-2 (wherein the auxiliary boom 30-2 is also applied) so that monopile 4 rotates around gripping construction 5 from the horizontal position shown in figure 7A to the final, substantially vertical position shown in figure 7D. As indicated in figures 7B and 7D, gripping construction 5 here moves in the athwartship direction 10 over rail guide 56 from first boom 3-1 toward second boom 3-2. This achieves, among other things, that slings 61 remain oriented substantially vertically, which enhances the stability of monopile 4 during the upending. The plane 54 of gripping members 53 rotates here around the alongship axis 55 from a vertical position B (figure 7A) into a horizontal position A (figure 7D). Meanwhile, any swinging movements of monopile 4 are damped by damping movements of the gripping members (53-1, 53-2) parallel to the athwartship direction 10 relative to work deck 20 with the movement-damping means 60.

In order to facilitate the upending of monopile 4 the first peripheral part 40 and the second peripheral part 43 lie at a mutual distance 44 which differs from zero, and moreover on either side of the centre of gravity 45 of the monopile, see for instance figure 8. It will be apparent that for upending the monopile 4 it is essential for gripping construction 5 to engage the monopile 4 suspended from second boom 3-2 at a distance from hoisting tackles 32 of second boom 3-2.

In order to then be able to lower the monopile being held in vertical position (see figure 8) toward the underwater bottom the support 57 present on the underside 41 of monopile 4 is rotated through an angle of for instance 5-10 degrees from a support position C into an unsupported position D.

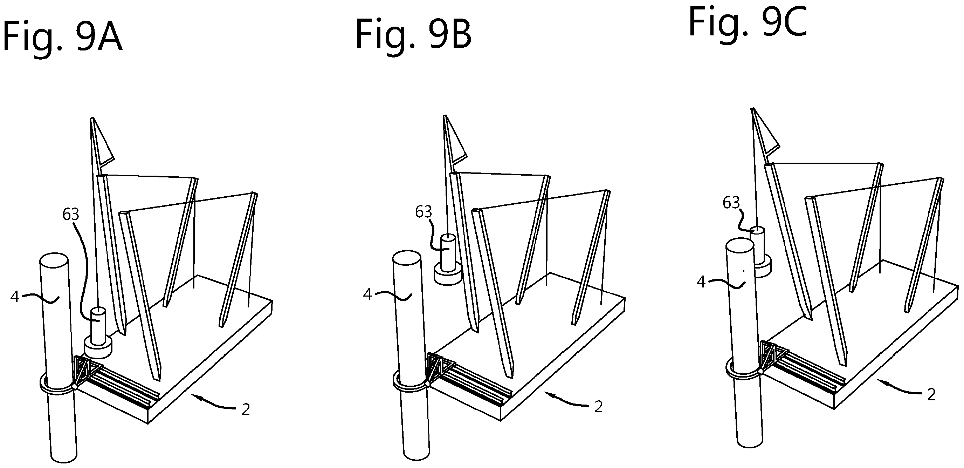

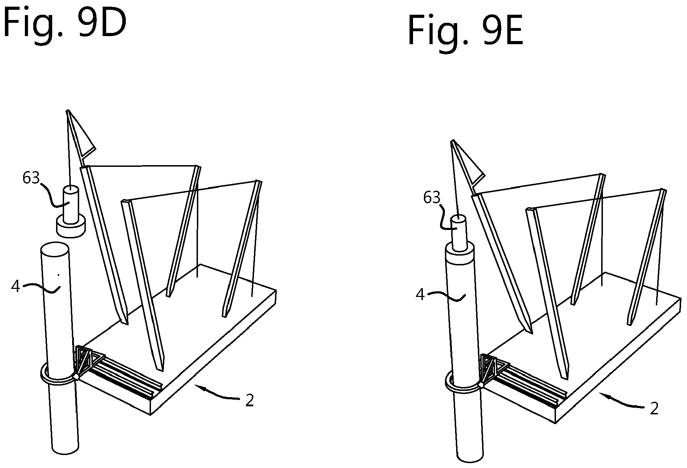

Monopile 4 is then lowered onto the underwater bottom by the second boom 3-2, and uncoupled therefrom as soon as the underside 41 of monopile 4 has reached the underwater bottom (figure 9A). In this situation monopile 4 is restrained in all horizontal directions by gripping construction 5 and in the vertical direction by the underwater bottom.

In the subsequent steps shown in figures 9A-9E monopile 4 is lowered in the substantially vertical position onto or into the underwater bottom (figure 9A). Monopile 4 is then fixed in the underwater bottom with a pile-driving means in the form of a pneumatic hammer 63. This is done by connecting the second boom 3-2 to the hammer 63 (figure 9A), which is then lifted in a number of steps 9B-9D and is placed on an upper side of the monopile resting on the underwater bottom as according to figure 9E. With the hammer 63 in this position, monopile 4 is then driven into the underwater bottom until the desired depth has been reached.

Once the fixation has been performed as desired, monopile 4 is uncoupled from gripping construction 5 by opening the gripping members (53-1, 53-2) and retracting them from first peripheral part 40. Platform 2 is then carried off to a subsequent position.

## Claims

1. Device (1) for lifting and placing on a ground surface of an elongate object (4) of at least 200 tons, comprising a floating platform (2) with a work deck (20) on which a lifting device (3) for lifting the object (4) is arranged, wherein the lifting device (3) comprises two A-frame-shaped booms (3-1, 3-2) which are disposed at a mutual distance in an athwartship direction (10) of the platform (2) and which are connected to the work deck (20) for pivoting around an athwartship axis (11) of the platform (2), and which are for this purpose in force-transmitting connection with two corresponding A-frame-shaped support structures (3-3, 3-4) arranged on the work deck (20), wherein the lifting device (3) further comprises a gripping construction (5) which is connected to the work deck (20) and has gripping members (53-1, 53-2) which are configured to engage a peripheral part (40) of the object (4) and which extend beyond an athwartship edge (2-4) of the platform (2), wherein the gripping construction (5) is displaceable over the work deck (20), and at least between the booms (3-1, 3-2) in the athwartship direction (10).

2. Device (1) according to claim 1, wherein the gripping members (53-1, 53-2) lie in a plane (54) and the plane (54) is rotatable around an alongship axis (55) between a horizontal and vertical position.

3. Device (1) according to claim 1 or 2, wherein the gripping members (53-1, 53-2) are movable between an open position, in which the peripheral part of the object (4) can be received by the gripping members (53-1, 53-2), and a closed position of the gripping members (53-1, 53-2).

4. Device (1) according to any one of the foregoing claims, wherein the gripping construction (5) further comprises a support (57) configured to support an underside of the object (4) during the lifting.

5. Device (1) according to claim 4, wherein the support (57) comprises two arms (57-1, 57-2) mounted on the gripping construction (5), wherein the support (57) is preferably U-shaped.

6. Device (1) according to any one of the foregoing claims, wherein the gripping construction (5) further comprises movement-damping means (60) configured to damp movements of the gripping members (53-1, 53-2) relative to the work deck (20).

7. Device (1) according to claim 6, wherein the movement-damping means (60) are configured to damp movements of the gripping members (53-1, 53-2) parallel to the athwartship direction (10).

8. Device (1) according to any one of the foregoing claims, wherein the gripping construction (5) comprises a lattice frame (50) which is connected to the work deck (20) and on which the gripping members (53-1, 53-2) are mounted.

9. Device (1) according to any one of the claims 2-8, wherein the gripping construction (5) comprises a rotary motor which is connected to the work deck (20) and which is configured to rotate the plane (54) of the gripping members (53-1, 53-2) between the horizontal and the vertical position around the alongship axis (55).

10. Device (1) according to any one of the foregoing claims, wherein the force-transmitting connection between each boom (3-1, 3-2) and the corresponding A-frame-shaped support structure (3-3, 3-4) comprises a tensioning cable (30) running between the two.

11. Device (1) according to any one of the foregoing claims, wherein at least one of the two booms (3-1, 3-2) is displaceable over the work deck (20) in the alongship direction (13).

12. Device (11) according to any one of the foregoing claims, wherein the object (4) is taken up at a lifting point of one of the two booms (3-1, 3-2) and the gripping construction (5) is configured to engage the object (4) suspended from the relevant boom (3-2, 3-2) at a distance from the lifting point.

13. Device (1) according to any one of the foregoing claims, wherein the object (4) is the monopile of a wind turbine, and the ground surface an underwater bottom.

14. Method for lifting and placing on a ground surface of an elongate object (4) of at least 200 tons, wherein the method comprises the steps of
a) providing a device (1) according to any one of the foregoing claims;
b) positioning the gripping construction (5) on a first, alongship side (2-1) of the platform (2) at the position of the first boom (3-1);
c) engaging a first peripheral part (40) of the object (4) in a substantially horizontal position with the gripping members (53-1, 53-2) of the gripping construction (5);
d) engaging another, second peripheral part (43) of the object (4) in substantially horizontal position with a sling (61), wherein the sling (61) is connected to the second boom (3-2) positioned opposite the alongship side 2-1);
e) lifting the second peripheral part (43) with the second boom (3-2) so that the object (4) rotates around the gripping construction (5) from the horizontal position to a substantially vertical position; wherein the gripping construction (5) moves from the first (3-1) to the second boom (3-2) in the athwartship direction (10) during step e).

15. Method according to claim 14, wherein the gripping members (53-1, 53-2) lie in a plane (54) and the plane (54) rotates between a horizontal and a vertical position around an alongship axis (55) in step e).

16. Method according to claim 15, wherein movements of the gripping members (53-1, 53-2) relative to the work deck (20) are damped, preferably parallel to the athwartship direction (10).

17. Method according to any one of the claims 15-16, wherein the object (4) is the monopile of a wind turbine, and the ground surface an underwater bottom.

## Patentansprüche

1. Vorrichtung (1) zum Anheben und Platzieren eines länglichen Gegenstandes (4) von mindestens 200 Tonnen auf eine Bodenfläche, mit einer schwimmenden Plattform (2) mit einem Arbeitsdeck (20), auf welchem eine Hebevorrichtung (3) zum Anheben des Gegenstandes (4) angeordnet ist, wobei die Hebevorrichtung (3) zwei A-rahmenförmige Ausleger (3-1, 3-2) aufweist, welche in gegenseitigem Abstand in einer Querschiffsrichtung (10) der Plattform (2) angeordnet sind und welche zum Schwenken um eine Querschiffsachse (11) der Plattform (2) herum mit dem Arbeitsdeck (20) verbunden sind, und welche zu diesem Zweck in kraftübertragender Verbindung mit zwei entsprechenden A-rahmenförmigen Trägerstrukturen (3-3, 3-4) stehen, die auf dem Arbeitsdeck (20) angeordnet sind, wobei die Hebevorrichtung (3) weiterhin eine Greifkonstruktion (5) aufweist, die mit dem Arbeitsdeck (20) verbunden ist und Greifelemente (53-1, 53-2) hat, welche zum Eingreifen in ein Umfangsteil (40) des Gegenstandes (4) ausgeführt sind und welche sich über eine Querschiffskante (2-4) der Plattform (2) hinaus erstrecken, wobei die Greifkonstruktion (5) über das Arbeitsdeck (20) sowie zumindest zwischen den Auslegern (3-1, 3-2) in der Querschiffsrichtung (10) verschiebbar ist.

2. Vorrichtung (1) nach Anspruch 1, wobei die Greifelemente (53-1, 53-2) in einer Ebene (54) liegen und die Ebene (54) um eine Längsschiffsachse (55) herum zwischen einer waagerechten und einer senkrechten Position drehbar ist.

3. Vorrichtung (1) nach Anspruch 1 oder 2, wobei die Greifelemente (53-1, 53-2) zwischen einer offenen Stellung, in der das Umfangsteil des Gegenstands (4) von den Greifelementen (53-1, 53-2) aufgenommen werden kann, und einer geschlossenen Stellung der Greifelemente (53-1, 53-2) bewegbar sind.

4. Vorrichtung (1) nach einem der vorhergehenden Ansprüche, wobei die Greifkonstruktion (5) weiterhin eine Abstützung (57) zum Abstützen einer Unterseite des Gegenstandes (4) während des Anhebens aufweist.

5. Vorrichtung (1) nach Anspruch 4, wobei die Abstützung (57) zwei an der Greifkonstruktion (5) angebrachte Arme (57-1, 57-2) aufweist, wobei die Abstützung (57) vorzugsweise U-förmig ist.

6. Vorrichtung (1) nach einem der vorhergehenden Ansprüche, wobei die Greifkonstruktion (5) weiterhin Bewegungsdämpfungseinrichtungen (60) zum Dämpfen von Bewegungen der Greifelemente (53-1, 53-2) bezüglich des Arbeitsdecks (20) aufweist.

7. Vorrichtung (1) nach Anspruch 6, wobei die Bewegungsdämpfungseinrichtungen (60) zum Dämpfen von Bewegungen der Greifelemente (53-1, 53-2) parallel zur Querschiffsrichtung (10) ausgeführt sind.

8. Vorrichtung (1) nach einem der vorhergehenden Ansprüche, wobei die Greifkonstruktion (5) einen Gitterrahmen (50) aufweist, der mit dem Arbeitsdeck (20) verbunden ist und an dem die Greifelemente (53-1, 53-2) angebracht sind.

9. Vorrichtung (1) nach einem der Ansprüche 2 bis 8, wobei die Greifkonstruktion (5) einen Drehmotor aufweist, der mit dem Arbeitsdeck (20) verbunden ist und der dazu ausgeführt ist, die Ebene (54) der Greifelemente (53-1, 53-2) zwischen der waagerechten und der senkrechten Position um die Längsschiffsachse (55) zu drehen.

10. Vorrichtung (1) nach einem der vorhergehenden Ansprüche, wobei die kraftübertragende Verbindung zwischen dem jeweiligen Ausleger (3-1, 3-2) und der entsprechenden A-rahmenförmigen Trägerstruktur (3-3, 3-4) ein zwischen den beiden verlaufendes Spannseil (30) aufweist.

11. Vorrichtung (1) nach einem der vorhergehenden Ansprüche, wobei mindestens einer der zwei Ausleger (3-1, 3-2) über das Arbeitsdeck (30) in einer Längsschiffsrichtung (13) verschiebbar ist.

12. Vorrichtung (1) nach einem der vorhergehenden Ansprüche, wobei der Gegenstand (4) an einem Hebepunkt eines der beiden Ausleger (3-1, 3-2) aufgenommen wird und die Greifkonstruktion (5) derart ausgeführt ist, dass sie in den an dem jeweiligen Ausleger (3-1, 3-2) hängenden Gegenstand (4) in einem Abstand von dem Hebepunkt eingreift.

13. Vorrichtung (1) nach einem der vorhergehenden Ansprüche, wobei es sich bei dem Gegenstand (4) um den Monopile einer Windkraftanlage und bei der Bodenfläche um einen Unterwasserboden handelt.

14. Verfahren zum Anheben und Platzieren eines länglichen Gegenstandes (4) von mindestens 200 Tonnen auf eine Bodenfläche, wobei das Verfahren die folgenden Schritte aufweist:
a) Bereitstellen einer Vorrichtung (1) nach einem der vorhergehenden Ansprüche,
b) Positionieren der Greifkonstruktion (5) auf einer ersten Längsschiffsseite (2-1) der Plattform (2) in der Position des ersten Auslegers (3-1),
c) Ergreifen eines ersten Umfangsteils (40) des Gegenstandes (4) in einer im Wesentlichen waagerechten Position mit den Greifelementen (53-1, 53-2) der Greifkonstruktion (5);
d) Ergreifen eines weiteren, zweiten Umfangsteils (43) des Gegenstandes (4) in einer im Wesentlichen waagerechten Position mit einem Hebegurt (61), wobei der Hebegurt (61) mit dem gegenüber der Längsschiffsseite (2-1) positionierten zweiten Ausleger (3-2) verbunden ist;
e) Anheben des zweiten Umfangsteils (43) mit dem zweiten Ausleger (3-2) derart, dass sich der Gegenstand (4) um die Greifkonstruktion (5) aus der waagerechten Position in eine im Wesentlichen senkrechte Position dreht, wobei sich die Greifkonstruktion (5) in Schritt e) von dem ersten (3-1) zu dem zweiten Ausleger (3-2) in der Querschiffsrichtung (10) bewegt.

15. Verfahren nach Anspruch 14, wobei in Schritt e) die Greifelemente (53-1, 53-2) in einer Ebene (54) liegen und sich die Ebene (54) zwischen einer waagerechten und einer senkrechten Position um eine Längsschiffsachse (55) dreht.

16. Verfahren nach Anspruch 15, wobei Bewegungen der Greifelemente (53-1, 53-2) bezüglich des Arbeitsdecks (20) gedämpft werden, vorzugsweise parallel zur Querschiffsrichtung (10).

17. Verfahren nach einem der Ansprüche 15 bis 16, wobei es sich bei dem Gegenstand (4) um den Monopile einer Windkraftanlage und bei der Bodenfläche um einen Unterwasserboden handelt.

## Revendications

1. Dispositif (1) pour le levage et le placement, sur une surface du sol, d'un objet allongé (4) d'au moins 200 tonnes, comprenant une plateforme flottante (2) ayant un pont de travail (20) sur lequel un dispositif de levage (3) pour le levage de l'objet (4) est agencé, dans lequel le dispositif de levage (3) comprend deux flèches à forme d'ossature en A (3-1, 3-2) qui sont disposées à une certaine distance mutuelle dans une direction transversale de navire (10) de la plateforme (2) et qui sont reliées au pont de travail (20) pour un pivotement autour d'un axe transversal de navire (11) de la plateforme (2), et qui sont à cet effet en liaison de transmission de force avec deux structures de support à forme d'ossature en A (3-3, 3-4) correspondantes agencées sur le pont de travail (20), dans lequel le dispositif de levage (3) comprend en outre une construction de saisie (5) qui est reliée au pont de travail (20) et possède des organes de saisie (53-1, 53-2) qui sont configurés pour venir en prise avec une partie périphérique (40) de l'objet (4) et qui s'étendent au-delà d'un bord transversal de navire (2-4) de la plateforme (2), dans lequel la construction de saisie (5) est déplaçable au-dessus du pont de travail (20), et au moins entre les flèches (3-1, 3-2) dans la direction transversale de navire (10).

2. Dispositif (1) selon la revendication 1, dans lequel les organes de saisie (53-1, 53-2) se situent dans un plan (54) et le plan (54) est rotatif autour d'un axe longitudinal de navire (55) entre une position horizontale et verticale.

3. Dispositif (1) selon la revendication 1 ou 2, dans lequel les organes de saisie (53-1, 53-2) sont mobiles entre une position ouverte, dans laquelle la partie périphérique de l'objet (4) peut être reçue par les organes de saisie (53-1, 53-2), et une position fermée des organes de saisie (53-1, 53-2).

4. Dispositif (1) selon l'une quelconque des revendications précédentes, dans lequel la construction de saisie (5) comprend en outre un support (57) configuré pour porter un côté inférieur de l'objet (4) pendant le levage.

5. Dispositif (1) selon la revendication 4, dans lequel le support (57) comprend deux bras (57-1, 57-2) montés sur la construction de saisie (5), dans lequel le support (57) est de préférence en forme de U.

6. Dispositif (1) selon l'une quelconque des revendications précédentes, dans lequel la construction de saisie (5) comprend en outre des moyens d'amortissement de mouvement (60) configurés pour amortir les mouvements des organes de saisie (53-1, 53-2) par rapport au pont de travail (20).

7. Dispositif (1) selon la revendication 6, dans lequel les moyens d'amortissement de mouvement (60) sont configurés pour amortir les mouvements des organes de saisie (53-1, 53-2) parallèlement à la direction transversale de navire (10).

8. Dispositif (1) selon l'une quelconque des revendications précédentes, dans lequel la construction de saisie (5) comprend une ossature à ciseaux (50) qui est reliée au pont de travail (20) et sur laquelle les organes de saisie (53-1, 53-2) sont montés.

9. Dispositif (1) selon l'une quelconque des revendications 2 à 8, dans lequel la construction de saisie (5) comprend un moteur rotatif qui est relié au pont de travail (20) et qui est configuré pour mettre en rotation le plan (54) des organes de saisie (53-1, 53-2) entre la position horizontale et la position verticale autour de l'axe longitudinal de navire (55).

10. Dispositif (1) selon l'une quelconque des revendications précédentes, dans lequel la liaison de transmission de force entre chaque flèche (3-1, 3-2) et la structure de support à forme d'ossature en A (3-3, 3-4) correspondante comprend un câble de mise en tension (30) s'étendant entre les deux.

11. Dispositif (1) selon l'une quelconque des revendications précédentes, dans lequel au moins l'une des deux flèches (3-1, 3-2) est déplaçable au-dessus du pont de travail (20) dans la direction longitudinale de navire (13).

12. Dispositif (1) selon l'une quelconque des revendications précédentes, dans lequel l'objet (4) est soulevé au niveau d'un point de levage de l'une des deux flèches (3-1, 3-2) et la construction de saisie (5) est configurée pour venir en prise avec l'objet (4) suspendu à la flèche (3-2, 3-2) concernée à une certaine distance du point de levage.

13. Dispositif (1) selon l'une quelconque des revendications précédentes, dans lequel l'objet (4) est le monopieu d'une éolienne, et la surface du sol est un fond sous-marin.

14. Procédé pour le levage et le placement, sur une surface du sol, d'un objet allongé (4) d'au moins 200 tonnes, dans lequel le procédé comprend les étapes de
a) la fourniture d'un dispositif (1) selon l'une quelconque des revendications précédentes ;
b) le positionnement de la construction de saisie (5) sur un premier côté longitudinal de navire (2-1) de la plateforme (2) à la position de la première flèche (3-1) ;
c) la mise en prise d'une première partie périphérique (40) de l'objet (4) dans une position sensiblement horizontale avec les organes de saisie (53-1, 53-2) de la construction de saisie (5) ;
d) la mise en prise d'une autre deuxième partie périphérique (43) de l'objet (4) en position sensiblement horizontale avec une élingue (61), dans lequel l'élingue (61) est reliée à la deuxième flèche (3-2) positionnée à l'opposé du côté longitudinal de navire (2-1) ;
e) le levage de la deuxième partie périphérique (43) avec la deuxième flèche (3-2) de sorte que l'objet (4) tourne autour de la construction de saisie (5), de la position horizontale à une position sensiblement verticale ; dans lequel la construction de saisie (5) se déplace de la première (3-1) à la deuxième flèche (3-2) dans la direction transversale de navire (10) pendant l'étape e).

15. Procédé selon la revendication 14, dans lequel les organes de saisie (53-1, 53-2) se situent dans un plan (54) et le plan (54) tourne entre une position horizontale et une position verticale autour d'un axe longitudinal de navire (55) à l'étape e).

16. Procédé selon la revendication 15, dans lequel les mouvements des organes de saisie (53-1, 53-2) par rapport au pont de travail (20) sont amortis, de préférence parallèlement à la direction transversale de navire (10).

17. Procédé l'une quelconque des revendications 15 à 16, dans lequel l'objet (4) est le monopieu d'une éolienne, et la surface du sol est un fond sous-marin.
